# EUROPEAN PATENT APPLICATION

(11) **EP 4 549 085 A1**
(43) Date of publication of application: **07.05.2025**
(21) Application number: 23831204.5
(22) Date of filing: 20.06.2023
(51) Int. Cl.: B23Q 3/157

(54) **TOOL-GRIPPING MEMBER, TOOL MAGAZINE, MACHINE TOOL**

(30) Priority: 30.06.2022 JP 2022106382
(71) Applicant: BROTHER KOGYO KABUSHIKI KAISHA, Nagoya-shi, Aichi 467-8561 (JP)
(72) Inventor: AMANO, Masahito, Nagoya-shi, Aichi 467-8562 (JP)
(74) Representative: Becker, Eberhard
(86) International application number: PCT/JP2023/022734
(87) International publication number: WO 2024/004758

(57) **Abstract**

The present invention provides a tool-gripping member, a tool magazine, and a machine tool that can reduce the possibility of tool magazine damage. This tool-gripping member 35 is provided to the tool magazine and grips a tool holder that supports a tool. A stand 351 is fixed to a magazine base of the tool magazine and comprises an engaging section 354 with which the tool holder engages. A pair of claw members 352A, 352B rotate around fulcrums C1, C2 provided to the stand 351, and sandwich and grip the tool holder while the tool holder is being engaged with the engaging section 354. The engaging section 354 of the stand 351 comprises groove sections 356, 360 extending in a direction perpendicular to the left-right direction in which the pair of claw members 352A, 352B face each other and the axial direction of the fulcrum sections C1, C2.

## Description

### BACKGROUND

### Technical Field

The invention relates to a tool-gripping member, a tool magazine, and a machine tool.

### Related Art

A machine tool of Patent Document 1 replaces a tool mounted on a spindle with a next tool gripped by a tool-gripping member of a tool magazine. When replacing a tool, the machine tool moves the spindle upward. A tool-gripping member fixed to the tool magazine grips a tool holder mounted on the spindle. The machine tool moves the tool magazine forward to release the clamp between the tool holder gripped by the tool-gripping member and the spindle. The machine tool drives a tool magazine driver to rotate the tool holder of the next tool to the replacement position. The machine tool moves the tool magazine rearward and clamps the tool holder of the next tool, which is in the replacement position, to the spindle. In this state, the machine tool moves the spindle downward and removes the tool holder to which the next tool is attached from the tool-gripping member.

### Citation List

### Patent Document

Patent Document 1: Japanese Patent Laid-open No. H6-740

### SUMMARY

### Technical Problem

The tool-gripping member may have high strength against loads in the up-down direction. Therefore, in a case where the spindle, which has moved upward during tool replacement collides with an unexpected position of the tool-gripping member, the tool magazine may be subjected to a load and damaged, instead of the tool-gripping member being damaged.

An object of the invention is to provide a tool-gripping member, a tool magazine, and a machine tool capable of reducing the possibility of damage to the tool magazine.

### Solution to Problem

In the tool-gripping member according to claim 1, the tool-gripping member is provided in a tool magazine and grips a tool holder that supports a tool, and the tool-gripping member includes: a base stand fixed to a magazine base of the tool magazine and including an engaging section with which the tool holder engages; and a pair of claw members that move pivotally around a fulcrum and that sandwich and grip the tool holder in a state where the tool holder is engaged with the engaging section, in which the engaging section of the base stand has a groove section extending in a direction perpendicular to an opposing direction in which the pair of claw members face each other and an axial direction of the fulcrum. When replacing tools, the spindle may move to an unexpected position, causing excessive load on the tool magazine. In this case, since the groove section is thinner than the other parts of the engaging section, the load is concentrated on the groove section of the tool-gripping member. As a result, instead of the tool magazine being damaged, the base stand of the tool-gripping member is damaged. Therefore, the possibility of the tool magazine being damaged can be reduced.

In the tool-gripping member according to claim 2, the groove section may have a predetermined groove width in the opposing direction, and when viewed from one side in the axial direction, the groove section may be disposed so as to overlap a center of the engaging section in the opposing direction. In this case, no matter where the spindle collides with the grip arm, the load is likely to be concentrated in the groove section of the tool-gripping member. As a result, instead of the tool magazine being damaged, the base stand of the tool-gripping member is damaged. Therefore, the possibility of the tool magazine being damaged can be reduced.

In the tool-gripping member according to claim 3, the tool holder may have a groove section at a predetermined position, and the engaging section may have a fitting part that fits into the groove section. If the spindle moves to an unexpected position, the groove section having the fitting part may be damaged, thereby reducing the possibility of the tool holder being damaged.

In the tool-gripping member according to claim 4, the material of the base stand may be aluminum. Even when the material of the tool-gripping member is aluminum, the base stand is damaged instead of the tool magazine. Therefore, the possibility of the tool magazine being damaged can be reduced.

In the tool-gripping member according to claim 5, the material of the base stand may be aluminum die-cast. Even when the material of the tool-gripping member is aluminum die-cast, the base stand is damaged instead of the tool magazine. Therefore, the possibility of the tool magazine being damaged can be reduced.

In the tool-gripping member according to claim 6, the tool-gripping member may be provided on a machine tool having an axial direction of a spindle extending in a horizontal direction. Even in a machine tool having an axial direction of a spindle extending in the horizontal direction, the tool-gripping member is capable of reducing the possibility of the tool magazine being damaged.

In the tool magazine according to claim 7, the tool-gripping member according to any one of the claim 1 to claim 6 is included. By the tool-gripping member being damaged, the tool magazine is capable of reducing the possibility of the tool magazine being damaged.

In the machine tool according to claim 8, the tool magazine according to claim 7 is included. By the tool-gripping member being damaged, the machine tool is capable of reducing the possibility of the tool magazine being damaged.

### BRIEF DESCRIPTION OF THE DRAWINGS

FIG. 1 is a perspective view of a machine tool 1.
FIG. 2 is a perspective view of the machine tool 1 (shutter 103: closed).
FIG. 3 is a perspective view of the machine tool 1 (shutter 103: open).
FIG. 4 is a perspective view of the machine tool 1 (magazine cover 10 omitted).
FIG. 5 is a right side view of the machine tool 1 (magazine cover 10 omitted).
FIG. 6 is a right side view showing a part of the periphery of a spindle head 6 in cross section.
FIG. 7 is a view showing a state in which an unclamping arm 50 has swung forward around a fulcrum shaft 45 from the state shown in FIG. 6.
FIG. 8 is a perspective view of a grip arm 35.
   (A) of FIG. 9 is a rear view of the grip arm 35, and (B) is a view of the grip arm 35 as seen from below.
FIG. 10 is a view showing the state of a spindle 7 in the machining position.
FIG. 11 is a view showing a state in which the spindle 7 has moved rearward from the state shown in FIG. 10.
FIG. 12 is a view showing a state in which the spindle 7 has been raised from the state shown in FIG. 11 to a Y-axis ATC origin.
FIG. 13 is a view showing a state in which the spindle 7 has moved rearward from the Y-axis ATC origin to an ATC position from the state shown in FIG. 12.

### DESCRIPTION OF THE EMBODIMENTS

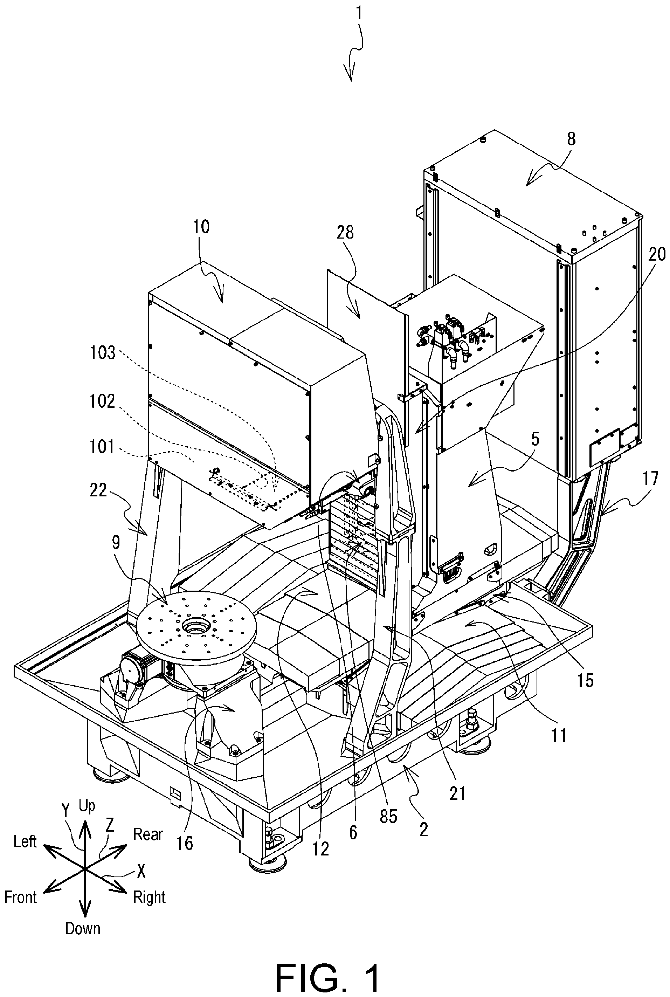

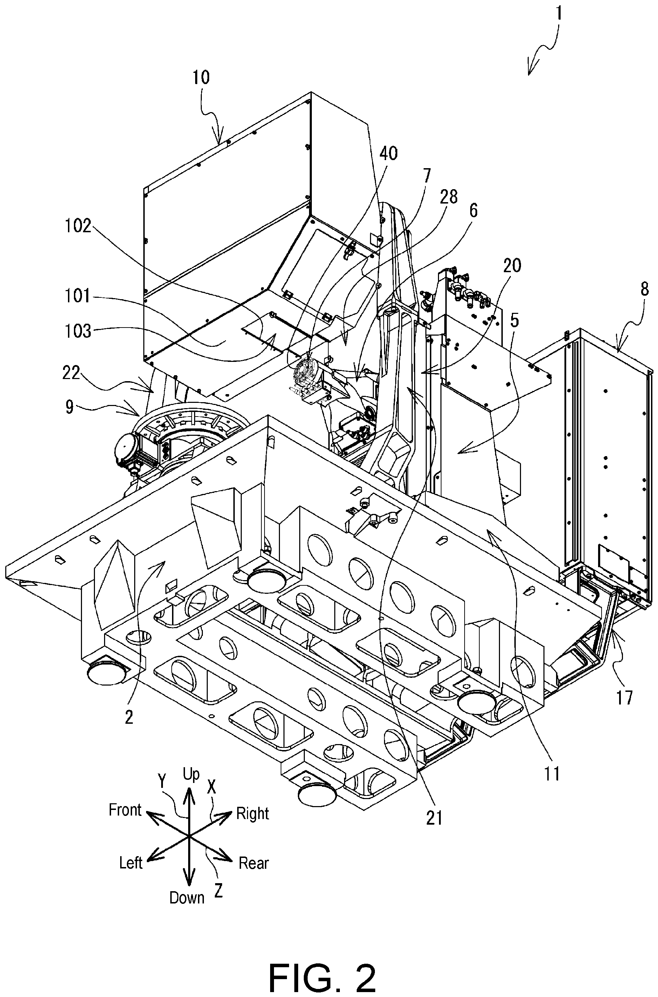

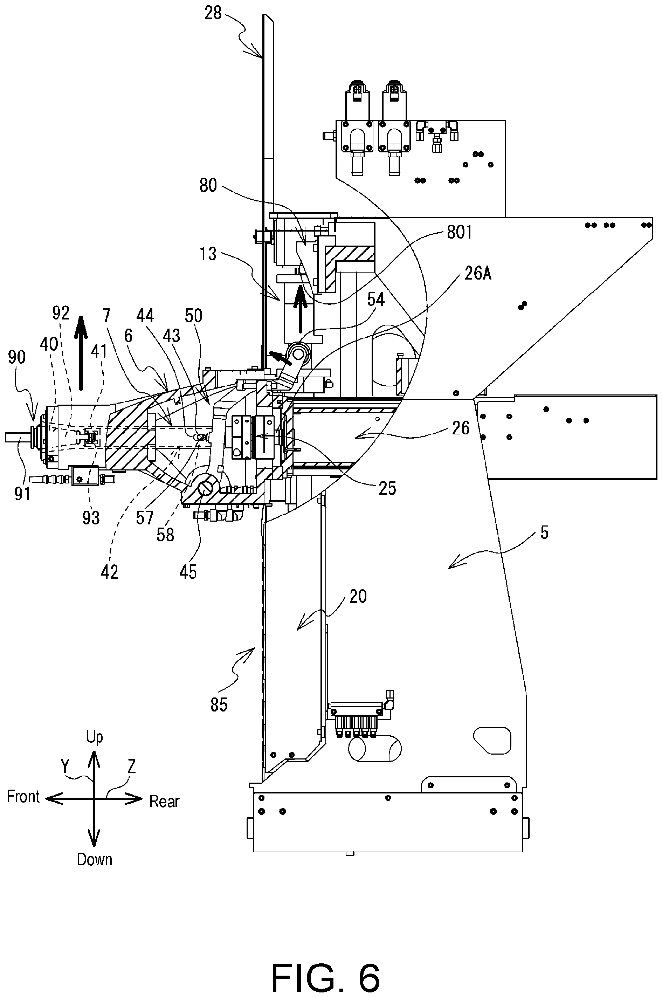

An embodiment of the invention will now be described. In the following description, arrows in the drawings will be used to indicate left and right, up and down, and front and rear. The left-right direction, the up-down direction, and the front-rear direction of a machine tool 1 are the X-axis direction, the Y-axis direction, and the Z-axis direction of the machine tool 1, respectively. The machine tool 1 shown in FIG. 1 is of a horizontal type in which a spindle 7 (see FIGS. 2 and 6) to be described below extends in the front-rear direction (Z-axis direction), and a pillar 5 to be described below moves in the X-axis direction and the Z-axis direction.

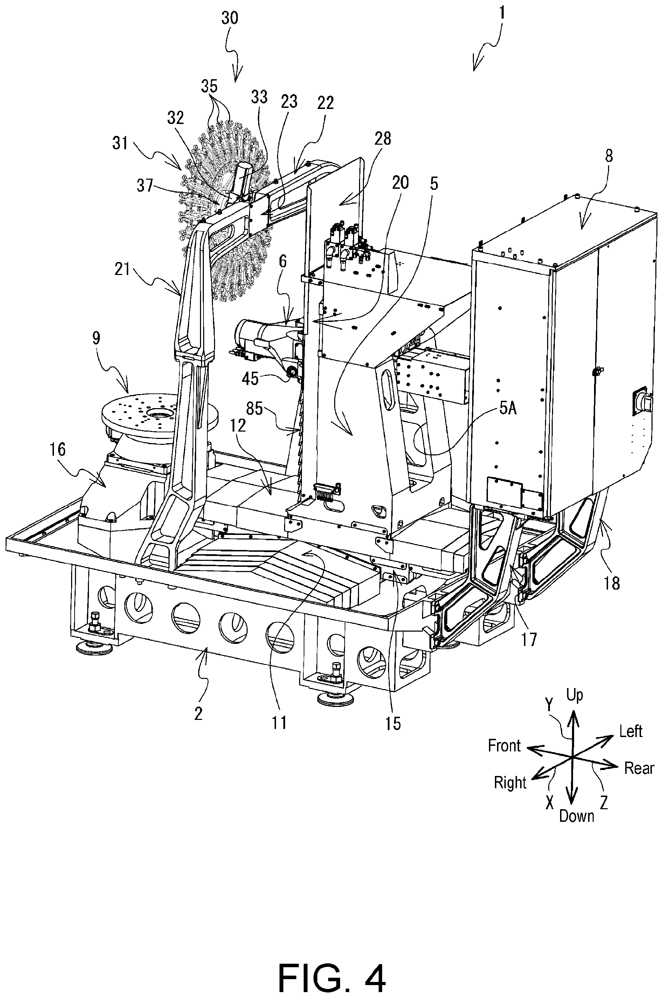

The structure of the machine tool 1 will be described with reference to FIGS. 1 to 7. As shown in FIGS. 1 and 2, the machine tool 1 includes a base 2, the pillar 5, a spindle head 6, a spindle 7 (see Figures 2 and 6), a control box 8, a rotary table 9, an X-axis movement mechanism 11, a Z-axis movement mechanism 12, a Y-axis movement mechanism 13 (see FIG. 6), an ATC device 30 (see Figure 4), a magazine cover 10, etc. The base 2 is an iron foundation having a rectangular shape in plan view and is long in the Z-axis direction. The X-axis movement mechanism 11 is provided at the rear of an upper surface of the base 2 and supports a moving body 15 movably in the X-axis direction. The Z-axis movement mechanism 12 is provided on an upper surface of the moving body 15 and supports the pillar 5 movably in the Z-axis direction.

The pillar 5 is a pillar extending in the up-down direction. The pillar 5 has a through opening 5A (see FIG. 4). The through opening 5A has a vertically long rectangular shape when viewed from the front, and penetrates a front surface and a rear surface of the pillar 5 in the front-rear direction. A frame cover 20 is attached to the front surface of the pillar 5. The frame cover 20 is a frame body having a vertically long rectangular shape when viewed from the front, and covers a gap between the pillar 5 and the spindle head 6 to be described below from the outside. The Y-axis movement mechanism 13 is provided on the front surface of the pillar 5, and supports the spindle head 6 moveably in the Y-axis direction along the front surface of the pillar 5 (see FIG. 6). The X-axis movement mechanism 11, the Z-axis movement mechanism 12, and the Y-axis movement mechanism 13 are each equipped with, for example, a guide, a ball screw, and a motor, and the target parts (moving body 15, the pillar 5, the spindle head 6) are moved along the guides by the power of the motor.

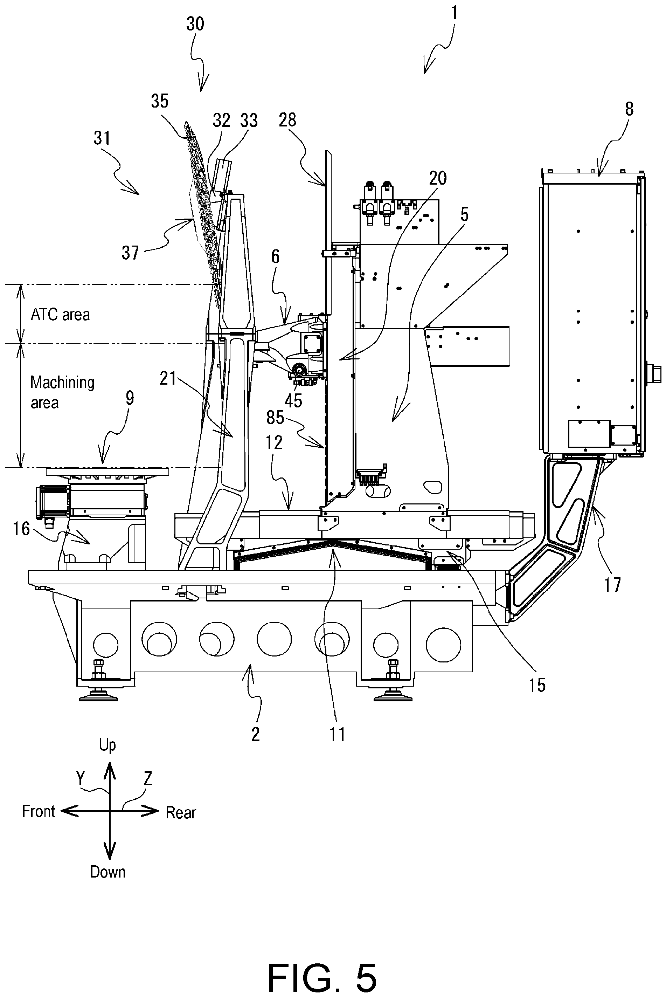

The spindle head 6 extends in the Z-axis direction. A front end side of the spindle head 6 is substantially cylindrical, and a rear end side thereof is substantially rectangular parallelepiped. The machine tool 1 has a machining area and an ATC area (see FIG. 5). In the Y-axis direction, the spindle head 6 is movable between the machining area and the ATC area. The machining area is provided in a space on the base 2 side (below) than the Y-axis origin. The Y-axis origin is a position where the Y-axis machine coordinate is 0. The ATC area is provided in a space on the opposite side (upper side) of the machining area with respect to the Y-axis origin. The machining area is an area where a workpiece fixed on the upper surface of the rotary table 9 is machined. The ATC area is an area where the ATC device 30 performs tool replacement. The ATC area is provided above the machining area and at a position overlapping with the machining area in the Z-axis direction.

The spindle head 6 includes an upper cover 28 and an armor cover 85. The upper cover 28 is a metal plate having a substantially rectangular shape when viewed from the front. A lower end of the upper cover 28 is fixed to a rear end of the upper surface of the spindle head 6. The upper cover 28 extends upward from the rear end of the upper surface of the spindle head 6. The upper cover 28 moves up and down integrally with the spindle head 6, thereby constantly covering the area above the spindle head 6 on the front surface of the pillar 5 from the front. The armor cover 85 is fixed in a suspended state to the rear end of the lower surface of the spindle head 6. The armor cover 85 includes a plurality of metal plates arranged in the up-down direction. The armor cover 85 telescopically expands and contracts in the up-down direction according to the height of the spindle head 6, thereby constantly covering the area below the spindle head 6 on the front surface of the pillar 5 from the front.

As shown in FIG. 6, the spindle 7 is provided at the front end side within the spindle head 6, and extends coaxially with the spindle head 6 in the Z-axis direction. The spindle head 6 rotatably supports the spindle 7. The spindle head 6 holds a spindle motor 26. An output shaft 26A of the spindle motor 26 extends forward and is coaxially connected to a rear end of the spindle 7 via a coupling 25. An unclamping arm 50 is provided in the spindle head 6. The unclamping arm 50 fixes and releases the clamp of a tool holder 90 mounted on the spindle 7.

The spindle 7 includes a tool mounting hole 40, a holder sandwiching member 41, and a draw bar 42. The tool mounting hole 40 is provided at the front end of the spindle 7 (see FIGS. 1 and 6). The tool mounting hole 40 is a substantially conical tapered hole whose diameter increases toward the front end of the spindle 7. The holder sandwiching member 41 is provided on the inner side (rear end side) of the tool mounting hole 40. The draw bar 42 is inserted coaxially into the shaft hole of the spindle 7 and is provided so as to be movable in the front-rear direction. The spindle 7 has a guide hole 44 formed on the outer peripheral surface at the rear end side. The guide hole 44 is an elongated hole extending parallel to the axial direction of the spindle 7. The draw bar 42 has a pin 43 at its rear end. The pin 43 extends in a direction perpendicular to the axial direction of the draw bar 42, and protrudes toward the outside of the spindle 7 through the guide hole 44 in the spindle 7. The guide hole 44 guides the pin 43 in parallel with the axial direction.

The tool holder 90 is detachably mounted on the tool mounting hole 40. The tool holder 90 holds a tool 91 at one end, and is provided with a tapered part 92 and a pull stud 93 at the other end. The tapered part 92 has a substantially conical shape corresponding to the tool mounting hole 40, and its diameter decreases in the direction opposite to the tool 91 side. The pull stud 93 protrudes from the top of the tapered part 92 in a direction away from the tapered part 92. The tapered part 92 is mounted on the tool mounting hole 40 of the spindle 7 in close contact therewith. When the tapered part 92 is mounted on the tool mounting hole 40, the holder sandwiching member 41 sandwiches the pull stud 93. In this state, the holder sandwiching member 41 is pulled rearward by a spring (not shown), whereby the sandwich of the pull stud 93 is locked. When the draw bar 42 in the spindle 7 presses the holder sandwiching member 41 forward, the holder sandwiching member 41 moves forward against the spring force, and the sandwich of the pull stud 93 is released.

As shown in FIG. 4, the base 2 is provided with a pair of support members 17 and 18 at the rear. The support members 17 and 18 are spaced apart from each other in the left-right direction, extend upward, and support the control box 8 from below. The control box 8 houses a control panel (not shown) therein. The control panel controls the operation of the machine tool 1. As shown in FIGS. 1, 4 and 5, the base 2 has a fix table 16 on a front side of the upper surface. The rotary table 9 is rotatably supported on a fix table 16. The rotary table 9 is located in front of the spindle head 6. The rotary table 9 has a workpiece (not shown) fixed to its upper surface by a jig (not shown), and is rotatable 360° around a rotation shaft parallel to the Y-axis direction.

As shown in FIG. 4, the base 2 has a pair of support columns 21 and 22 on both the left and right sides at the front side of the upper surface. The support column 21 extends upward from the right side of the upper surface of the base 2 and has its upper part bent to the left at approximately 90 degrees. The support column 22 extends upward from the left side of the upper surface of the base 2 and has its upper part bent to the right at approximately 90 degrees. A connecting plate 23 has a substantially rectangular shape when viewed from the front, and is fixed between the upper parts of the support columns 21 and 22 which face each other.

The ATC device 30 is fixed to a front surface of the connecting plate 23. The ATC device 30 is supported above the spindle head 6 by the support columns 21 and 22. As shown in FIGS. 4 and 5, the ATC device 30 includes a tool magazine 31, a decelerator 32, a magazine motor 33, and the like. The tool magazine 31 includes a magazine base 37 and a plurality of grip arms 35. The magazine base 37 is substantially disk-shaped and is rotatably supported on the front surface of the connecting plate 23 around an axial line parallel to the Z-axis direction. The decelerator 32 and the magazine motor 33 are attached to the tool magazine 31. An output shaft (not shown) of the magazine motor 33 is connected to a rotation shaft (not shown) of the magazine base 37 via the decelerator 32. Therefore, the power of the magazine motor 33 is transmitted to the rotation shaft of the magazine base 37 via the decelerator 32.

As shown in FIGS. 4 and 5, the plurality of grip arms 35 are arranged side by side along the outer periphery of the magazine base 37 and extend radially outward in the radial direction. The grip arms 35 grip the tool holder 90 from the left-right direction with the tool holder 90 laid horizontally (not shown). The grip arm 35 which replaces tools with the spindle 7 moves to a tool replacement position in the tool magazine 31. The tool replacement position is the lowest position of the tool magazine 31. The structure of the grip arm 35 will be described later.

As shown in FIGS. 1 to 3, the magazine cover 10 is fixed to the front surface of the upper part of each of the support columns 21 and 22. The magazine cover 10 is box-shaped and covers the periphery of the tool magazine 31. The magazine cover 10 prevents chips and cutting fluid from splashing onto the tool magazine 31. An opening 102 is provided in a bottom wall 101 of the magazine cover 10. The opening 102 has a rectangular shape when viewed from the bottom, and is located directly below the tool replacement position of the tool magazine 31. The opening 102 is provided with a shutter 103. The shutter 103 opens and closes the opening 102 under the control of a control panel.

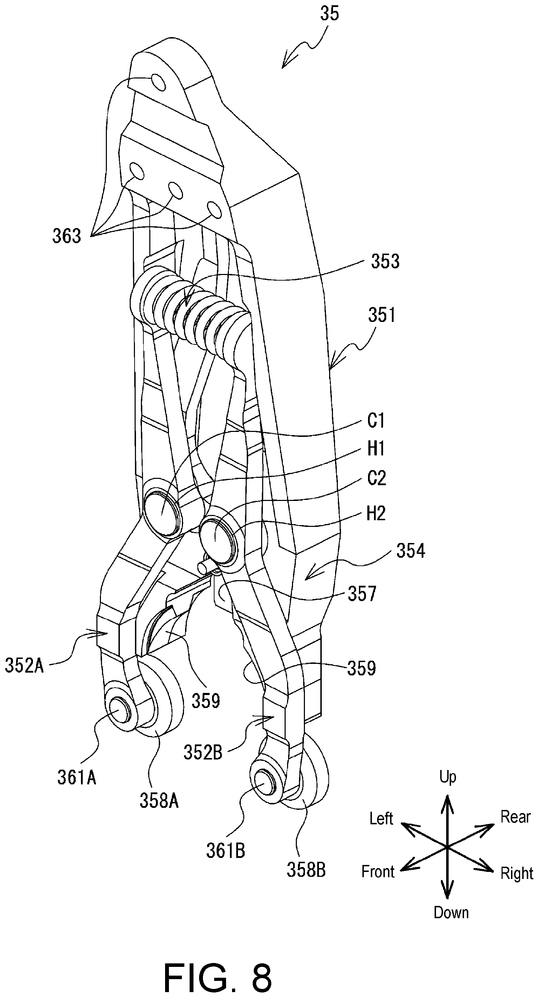

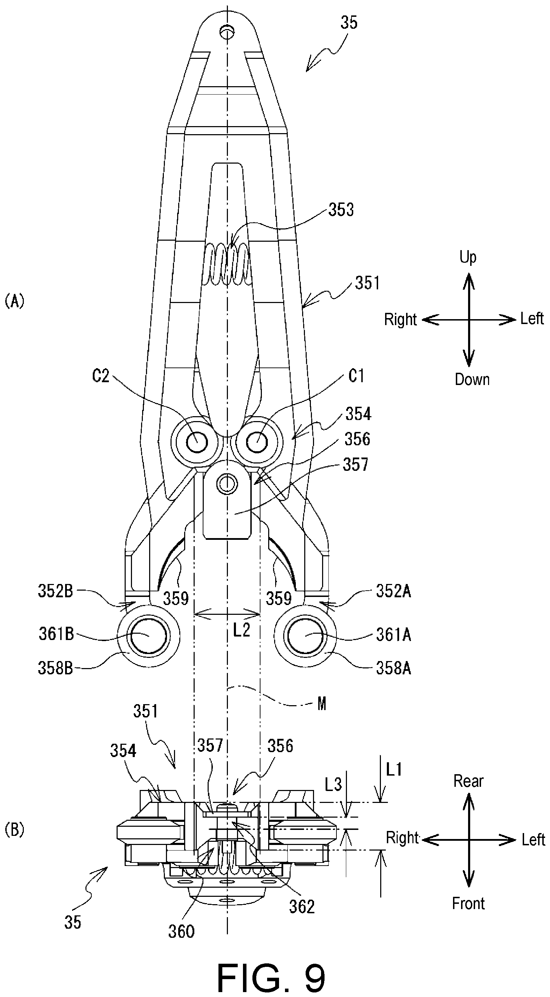

The structure of the grip arm 35 will be described with reference to FIGS. 8 and 9. The grip arm 35 has a symmetrical structure. The grip arm 35 includes a base stand 351, a pair of claw members 352A and 352B, a spring member 353, and the like. The base stand 351 extends in the up-down direction. An upper end of the base stand 351 is provided with a plurality of screw holes 363. The base stand 351 is fixed to the magazine base 37 of the tool magazine 31 by screws or the like through the plurality of screw holes 363. Fulcrums C1 and C2 are provided on the lower side of the base stand 351. The fulcrums C1 and C2 are arranged on the left and right. The fulcrums C1 and C2 are cylindrical and protrude forward from the base stand 351. The axial direction of the fulcrums C1 and C2 is the front-rear direction.

The lower end of the base stand 351 is provided with an engaging section 354. The engaging section 354 is a part of the base stand 351 that engages with the tool holder 90. The engaging section 354 extends downward in a two-way manner. A holding part 359 is provided on the inner part of the two-way extending part of the engaging section 354. The holding part 359 engages with a groove provided on the outer peripheral surface of the tool holder 90 to hold the tool holder 90. A predetermined thickness L1 (see (B) of FIG. 9) of the engaging section 354 in the front-rear direction is, for example, 23 mm.

As shown in (A) and (B) of FIG. 9, the engaging section 354 includes groove sections 356 and 360. The groove section 356 is provided on a rear side of the engaging section 354, and the groove section 360 is provided on a front side of the engaging section 354. When viewed from the front, the groove sections 356 and 360 are arranged to overlap at a center M of the base stand 351 in the left-right direction. More specifically, the centers of the groove sections 356 and 360 in the left-right direction overlap with the center M of the base stand 351. The groove section 356 is recessed forward from a rear surface of the engaging section 354. The groove section 360 is recessed rearward from a front surface of the engaging section 354. A central part in the left-right direction of the groove section 360 is further recessed rearward. As a result, a thinnest part 362 that is the thinnest in the front-rear direction is formed in a center part of the engaging section 354 in the left-right direction.

A predetermined groove width L2 in the left-right direction of the groove sections 356 and 360 and a predetermined thickness L3 in the front-rear direction of the thinnest part 362 of the base stand 351 are determined by the material of the base stand 351. The material of the base stand 351 is, for example, aluminum or aluminum die-cast. When the material is aluminum, the groove width L2 of the groove section 356 is 26 mm, and the thickness L3 of the thinnest part 362 of the base stand 351 is 6 mm. When the material is aluminum die-cast, the groove width L2 of the groove section 356 is 26 mm, and the thickness L3 of the thinnest part 362 of the base stand 351 is 2 mm. Regardless of the material, due to the relationship between the thickness L1 of the base stand 351 and the thickness L3 of the thinnest part 362, when a force of, for example, 5000 N is applied to the grip arm 35, the grip arm 35 may break with the thinnest part 362 as the base point.

A key 357 is fixed in the groove section 356. The key 357 has a rectangular shape extending in the up-down direction. With the key 357 fitted in the key groove of the tool holder 90, the grip arm 35 holds the tool holder 90. Therefore, the orientation of the tool holder 90 relative to the grip arm 35 is constant.

The base stand 351 is provided with the pair of claw members 352A and 352B. The pair of claw members 352A and 352B extend in the up-down direction. The pair of claw members 352A and 352B are disposed opposite each other in the left-right direction. The pair of claw members 352A and 352B are formed with holes H1, H2. The fulcrums C1 and C2 of the base stand 351 are inserted into the holes H1 and H2. In this state, the pair of claw members 352A and 352B are supported pivotally. The claw member 352A moves pivotally around the fulcrum C1 of the base stand 351. The claw member 352B moves pivotally around the fulcrum C2 of the base stand 351. The lower ends of the pair of claw members 352A and 352B pivotally support rollers 358A and 358B, respectively. The rollers 358A and 358B are disposed below the two-way extending part of the engaging section 354 of the base stand 351. The rollers 358A and 358B rotate around shafts 361A and 361B extending in the front-rear direction.

The spring member 353 is fixed between upper ends of the pair of claw members 352A and 352B. The spring member 353 constantly biases the upper ends of the pair of claw members 352A and 352B in directions away from each other. As a result, the lower ends of the pair of claw members 352A and 352B move pivotally around the fulcrums C1 and C2 in directions approaching each other. With the holding part 359 of the engaging section 354 holding the tool holder 90 and the key 357 fitted into the key groove of the tool holder 90, the pair of claw members 352A and 352B sandwich and grip the tool holder 90.

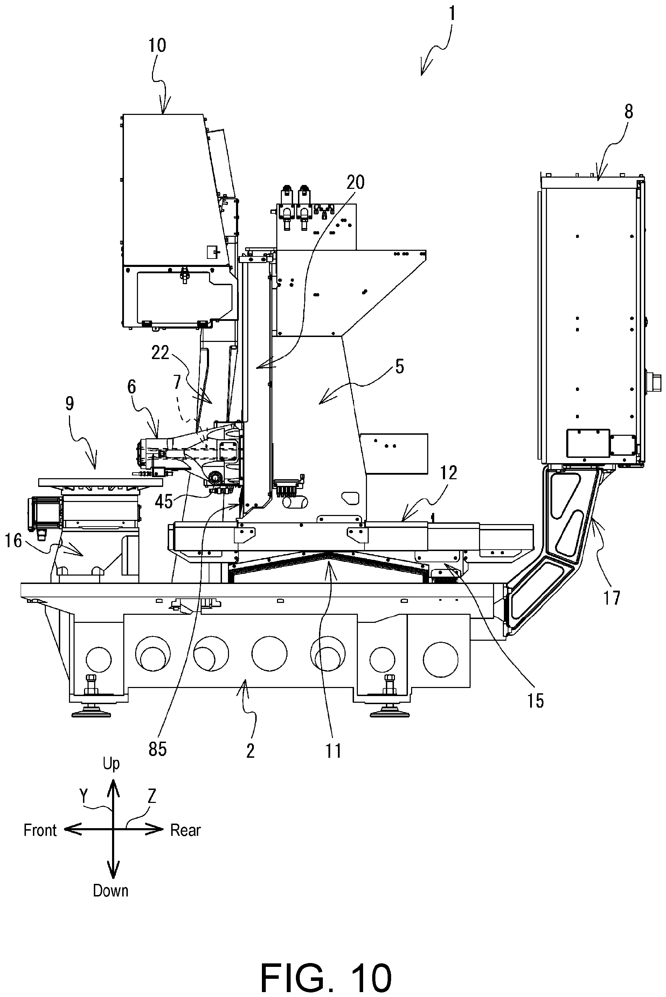

The ATC operation of the machine tool 1 will now be described. In FIGS. 10 to 13, the tool holder 90 is omitted. In the following, in order to explain the position of the spindle 7 during ATC operation, the movement of the spindle head 6 will be explained as the movement of the spindle 7. As shown in FIG. 10, during machining of a workpiece, the spindle 7 is located within the machining area. The shutter 103 of the magazine cover 10 is in a closed state (see FIG. 2). The tapered part 92 of the tool holder 90 is mounted on the tool mounting hole 40 of the spindle 7. The holder sandwiching member 41 grips the pull stud 93 of the tool holder 90 and is locked by spring force (see FIG. 6).

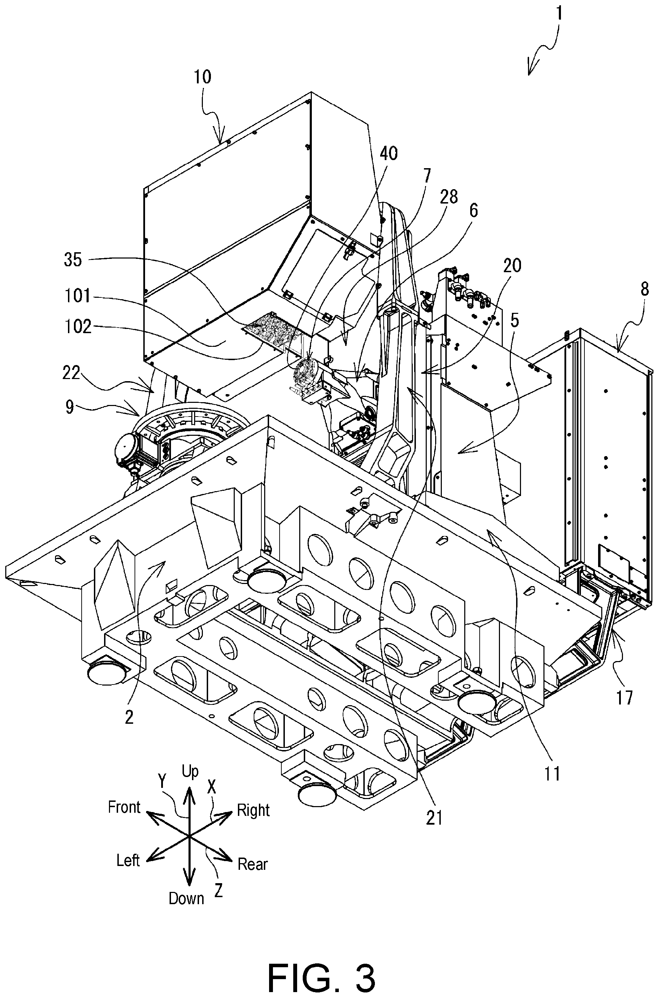

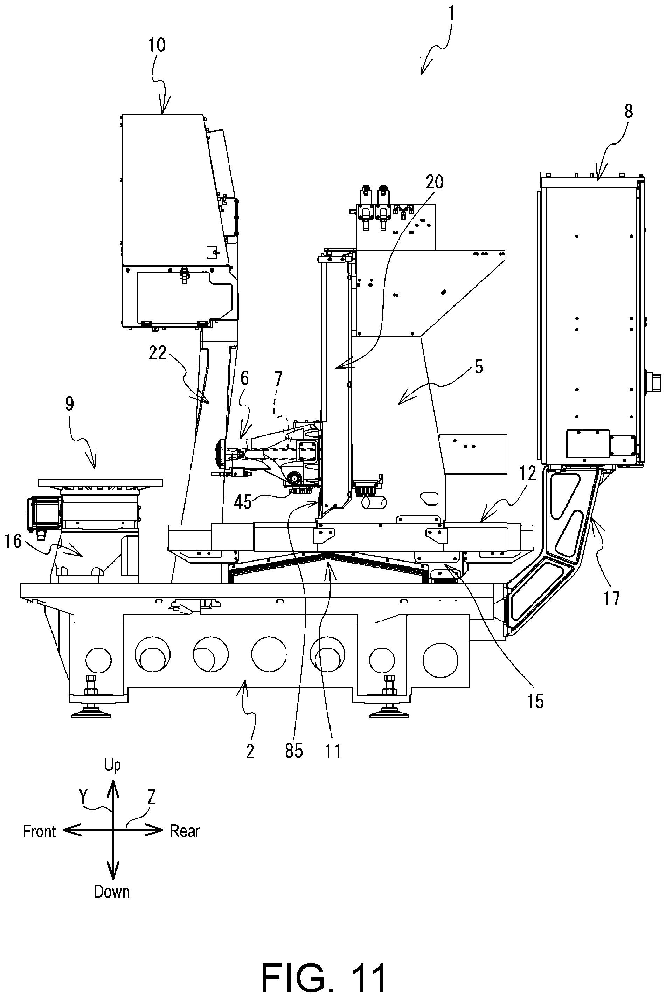

The CPU in the control panel reads the tool replacement command from the NC program. As shown in FIG. 11, the spindle 7 retreats along the Z-axis to a position where the tool 91 does not come into contact with the workpiece and jig (not shown) on the rotary table 9. The shutter 103 of the magazine cover 10 opens (see FIG. 3). The grip arm 35 at the tool replacement position is exposed downward through the opening 102. The grip arm 35 in the tool replacement position is empty and does not grip the tool holder 90.

The spindle 7 starts to rise and moves toward a Y-axis ATC origin. The Y-axis ATC origin is a position having the same coordinates as the ATC origin in the Y-axis direction, and is in front of the ATC origin. The ATC origin is a reference point provided within the ATC area for tool replacement, and is a position at which the tool magazine 31 is rotatable.

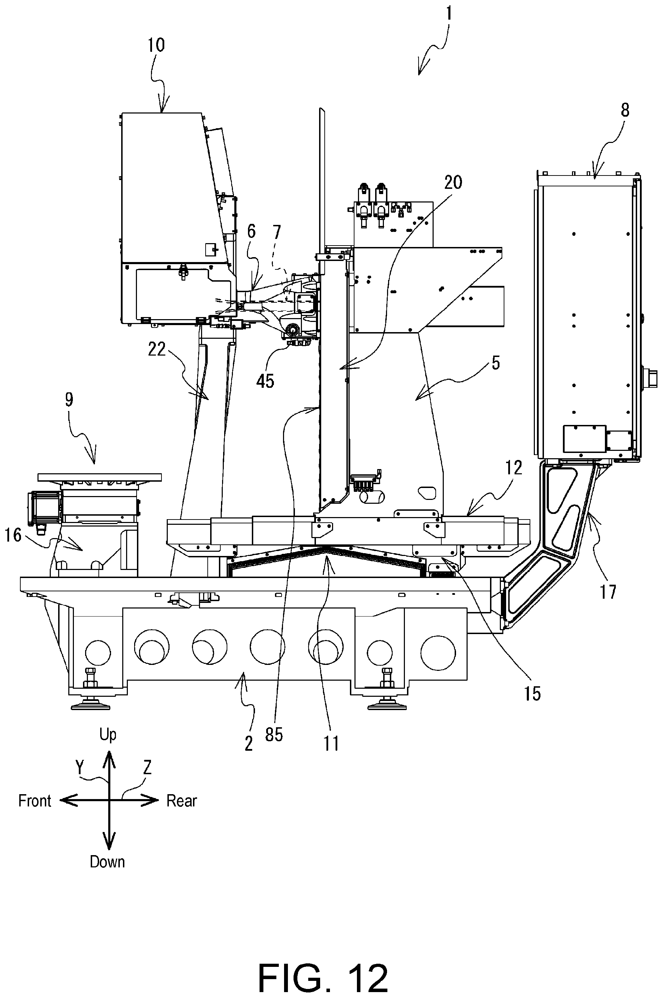

As shown in FIG. 12, when the spindle 7 reaches the Y-axis ATC origin, the tool holder 90 mounted on the spindle 7 is pushed from below through the opening 102 of the magazine cover 10 into the grip arm 35 at the tool replacement position. When the tool holder 90 comes into contact with the rollers 358A and 358B of the pair of claw members 352A and 352B from below and rises, the rollers 358A and 358B are moved pivotally by the tool holder 90 in directions away from each other against a biasing force of the spring member 353. When the tool holder 90 is pushed all the way into the engaging section 354, the holding part 359 of the engaging section 354 holds the groove of the tool holder 90, and the key 357 of the engaging section 354 fits into the key groove of the tool holder 90. In this case, the rollers 358A and 358B of the pair of claw members 352A and 352B move in directions approaching each other due to the biasing force of the spring member 353. As a result, the grip arm 35 grips the tool holder 90.

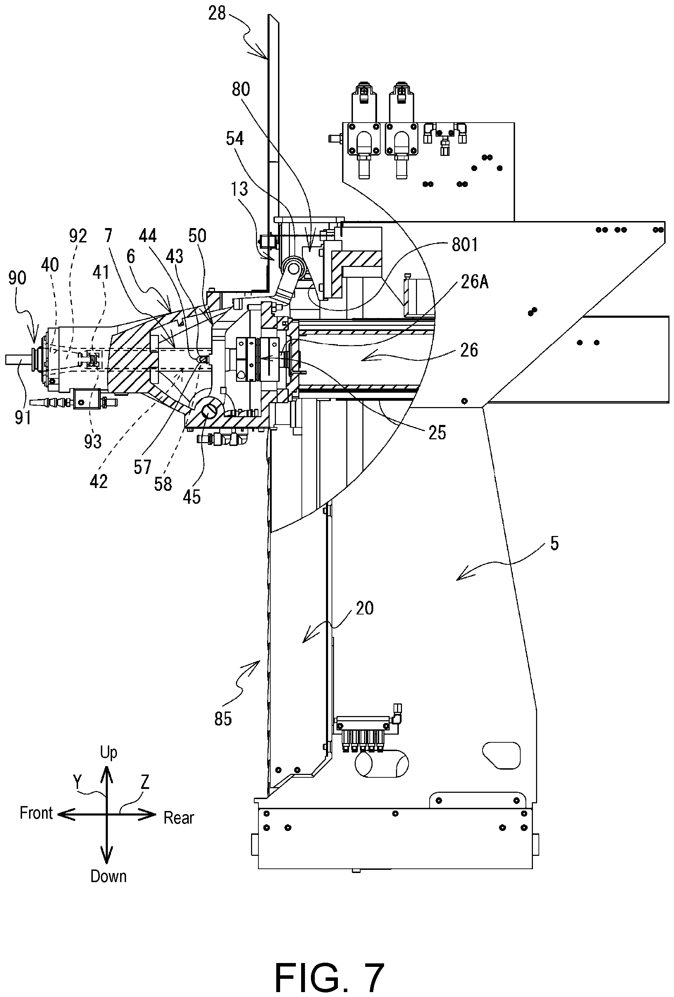

On the other hand, as the spindle 7 rises, a cam follower 54 comes into contact with the lower part of a cam surface 801 of a cam member 80 and slides upward (see FIG. 7). A tension spring constantly biases the unclamping arm 50 clockwise around a fulcrum shaft 45 when viewed from the right side. Therefore, the cam follower 54 comes into close contact with the cam surface 801. The cam follower 54 moves forward as it slides upward along the cam surface 801. Therefore, the unclamping arm 50 swings around the fulcrum shaft 45 counterclockwise as viewed from the right side against the spring force of the tension spring. Pressing parts 57 and 58 come into contact with both ends of the pin 43 of the draw bar 42 from behind, and push the draw bar 42 forward. The draw bar 42 biases the holder sandwiching member 41 forward. The holder sandwiching member 41 releases the lock on the pull stud 93. The tool holder 90 may be removed from the tool mounting hole 40 of the spindle 7.

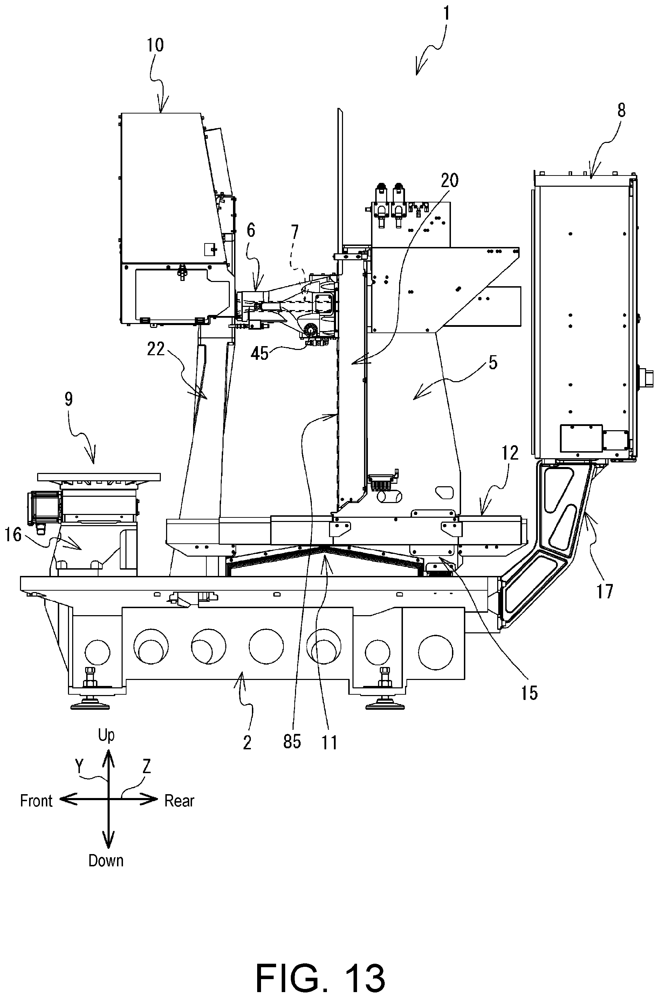

With the grip arm 35 sandwiching the tool holder 90 mounted on the spindle 7, the spindle 7 retreats from the Y-axis ATC origin to the ATC position (see FIG. 13). Since the pull stud 93 is unlocked, the tapered part 92 of the tool holder 90 comes out of the tool mounting hole 40 of the spindle 7. The tool magazine 31 rotates to index and position the grip arm 35 that grips the tool holder 90 that holds the next tool at the tool replacement position. The next tool means the tool to be mounted on the spindle 7 next, as specified by the tool replacement command. The tapered part 92 of the tool holder 90 of the next tool is located in front of the tool mounting hole 40 of the spindle 7.

The spindle 7 advances from the ATC position toward the Y-axis ATC origin (see FIG. 12). The tapered part 92 of the tool holder 90 is inserted into the tool mounting hole 40, and the holder sandwiching member 41 sandwiches the pull stud 93. The cam follower 54 slides the cam surface 801 from above to below. Since the cam follower 54 moves rearward, the unclamping arm 50 swings clockwise around the fulcrum shaft 45 when viewed from the right side. The pressing parts 57 and 58 move rearwardly away from both ends of the pin 43, releasing the forward pressure on the draw bar 42. Since the draw bar 42 releases the forward bias of the holder sandwiching member 41, the holder sandwiching member 41 locks the sandwich of the pull stud 93. With the ATC operation completed, the spindle 7 descends to the machining area and proceeds to machining the next workpiece.

In the above ATC operation, the spindle 7 may move to an unexpected position. For example, if there is an error in setting the machine parameters, the spindle 7 will rise to a position displaced from the Y-axis ATC origin. In this case, the tool holder 90 mounted on the spindle 7 cannot be properly mounted on the engaging section 354 of the grip arm 35. At this time, the tool 91, the tool holder 90 or the spindle 7 moving upward for tool replacement collides with the grip arm 35 from below. An excessive load is generated on the grip arm 35. The load of the collision is concentrated on the thinnest part 362 of the grip arm 35. As a result, the grip arm 35 is damaged with the thinnest part 362 as the base point. Damage to the grip arm 35 means deformation of the overall shape, such as cracking or crushing. By damaging the grip arm 35, no load is applied to the magazine base 37 of the tool magazine 31, the decelerator 32, etc. Therefore, the grip arm 35 suppresses damage to the magazine base 37 of the tool magazine 31, the decelerator 32, etc. In this case, the user may restore the machine tool 1 simply by replacing the grip arm 35 with a new one.

As described above, the engaging section 354 of the base stand 351 has the groove sections 356 and 360 which extend in the left-right direction in which the pair of claw members 352A and 352B face each other and in the up-down direction perpendicular to the axial direction of the fulcrums C1 and C2.

When replacing tools, the spindle 7 may move to an unexpected position, causing an excessive load on the tool magazine 31. In this case, since the groove sections 356 and 360 are thinner than the other parts of the engaging section 354, the load is concentrated on the groove sections 356 and 360 of the grip arm 35. As a result, instead of the tool magazine 31 being damaged, the base stand 351 of the grip arm 35 is damaged. Therefore, the possibility of the tool magazine 31 being damaged can be reduced. In this case, the user need only replace the grip arm 35. Therefore, the grip arm 35 is capable of reducing opportunity loss for the user compared to when the tool magazine 31 is damaged.

The groove sections 356 and 360 have the predetermined groove width L2 in the left-right direction. When viewed from the front, the groove sections 356 and 360 overlaps with the center M of the engaging section 354 in the left-right direction. In this case, no matter where the spindle 7 collides with the grip arm 35, the load is likely to be concentrated in the groove sections 356 and 360 of the grip arm 35. As a result, instead of the tool magazine 31 being damaged, the base stand 351 of the grip arm 35 is damaged. Therefore, the possibility of the tool magazine 31 being damaged can be reduced.

The tool holder 90 has a key groove at predetermined locations. The engaging section 354 is provided with the key 357 that fits into the key groove. If the spindle 7 moves to an unexpected position, the groove section 356 with the key 357 is damaged, thereby reducing the possibility of the tool holder 90 being damaged.

The material of the base stand 351 is aluminum. Even when the grip arm 35 is made of aluminum, the base stand 351 is damaged instead of the tool magazine 31. Therefore, the possibility of the tool magazine 31 being damaged can be reduced.

The base stand 351 is made of aluminum die-cast. Even when the grip arm 35 is made of aluminum die-cast, the base stand 351 is damaged instead of the tool magazine 31. Therefore, the possibility of the tool magazine 31 being damaged can be reduced.

The grip arm 35 is provided on the machine tool 1 in which the axial direction of the spindle 7 extends in the front-rear direction. The grip arm 35 is capable of reducing the possibility of damage to the tool magazine 31 even in the machine tool 1 in which the axial direction of the spindle 7 extends in the front-rear direction.

The tool magazine 31 includes the grip arm 35. By the grip arm 35 being damaged, the tool magazine 31 is capable of reducing the possibility of the tool magazine 31 being damaged.

The machine tool 1 includes the tool magazine 31. By the grip arm 35 being damaged, the machine tool 1 is capable of reducing the possibility of the tool magazine 3 being damaged.

The invention is not limited to the above-described embodiments, and various modifications are possible. Although the machine tool 1 in the above embodiment is of a horizontal type, it may be of a vertical type in which the axial direction of the spindle 7 is up-down direction. Although the machine tool 1 has the Z-axis movement mechanism 12 above the X-axis movement mechanism 11, the upper and lower positions of the X-axis movement mechanism 11 and the Z-axis movement mechanism 12 may be reversed. In the machine tool 1, the pillar 5 moves in the X-axis direction and the Z-axis direction, but the position of the pillar 5 may be fixed relative to the base 2 and the table supporting the workpiece may be moved in the X-axis direction and the Z-axis directions.

In the above embodiments, the grip arm 35 has the shape shown in FIG. 8 and FIG. 9, but is not limited thereto. The shapes of the base stand 351 and the pair of claw members 352A and 352B may be changed as appropriate. Although the pair of claw members 352A and 352B rotate around the two fulcrums C1 and C2, respectively, they may be configured to move pivotally around a single fulcrum. The fulcrums C1 and C2 are provided on the base stand 351, but are not limited thereto. The fulcrums C1 and C2 may be provided on the pair of claw members 352A and 352B. In this case, holes H1, H2 through which the fulcrums C1 and C2 may be the inserted may be provided in the base stand 351. Even in this case, the pair of claw members 352A and 352B are pivotally moveable around the fulcrums C1 and C2.

In the above embodiments, the material of the base stand 351 is aluminum or aluminum die-cast, but is not limited thereto. For example, the base stand 351 may be made of other materials, such as iron, copper, or the like. In this case, the thickness L1 of the base stand 351 and the thickness L3 of the thinnest part 362 of the base stand 351 may be set according to the material. In this case, it is preferable to set the thickness L1 and the thickness L3 such that the base stand 351 will be damaged when a force of 5000 N is applied.

In the above embodiments, the thickness L1 of the base stand 351 and the thickness L3 of the thinnest part 362 are determined such that the grip arm 35 will be damaged when a force of 5000 N is applied, but are not limited thereto. For example, the thickness L1 and the thickness L3 may be set such that the grip arm 35 is damaged when a force of another magnitude other than 5000 N is applied. In this case, the groove width L2 of the groove sections 356 and 360 may also be set appropriately. It may be also be set to be one that is damaged at a force of less than 5000N. In this case, the groove width L2 of the groove sections 356 and 360 may also be set appropriately.

In the above embodiments, the centers in the left-right direction of the groove sections 356 and 360 are arranged to overlap with the center M in the left-right direction of the engaging section 354, but are not limited thereto. For example, it is sufficient that a part of the groove sections 356 and 360 overlaps with the center M. Furthermore, the groove sections 356 and 360 do not have to be disposed to overlap with the center M of the engaging section 354 in the left-right direction. For example, the groove sections 356 and 360 may be disposed to the left or right of the center M of the engaging section 354. The shape of the groove sections 356 and 360 may be changed as desired. For example, the shape of the groove sections 356 and 360 may be elongated and linear, or may be round or elliptical.

In the above embodiments, the thickness L3 of the thinnest part 362 is determined by the groove sections 356 and 360, but is not limited thereto. For example, the thinnest part 362 of the groove section 360 may be eliminated. In this case, the thickness L3 associated with the groove sections 356 and 360 may be specified without the thinnest part 362. Either the groove sections 356 and 360 may be omitted. In this case, the thickness L 3 of the base stand 351 may be determined by either the groove section 356 or the groove section 360.

In the above description, the grip arm 35 is an example of a "tool-gripping member." The key 357 is an example of a "fitting part". The left-right direction in FIGS. 8 and 9 is an example of the "opposing direction". The front-rear direction is an example of the "axial direction." The front or the rear is an example of "one side". The front-rear direction is an example of the "horizontal direction."

### [Reference Signs List]

1 Machine tool
31 Tool magazine
35 Grip arm
37 Magazine base
90 Tool holder
91 Tool
351 Base stand
354 Engaging section
352A, 352B Pair of claw member
356, 360 Groove section
357 Key
C1, C2 Fulcrum
L2 Groove width
M Center

## Claims

1. A tool-gripping member, to be provided in a tool magazine and configured to grip a tool holder that supports a tool, the tool-gripping member comprising:
a base stand configured to be fixed to a magazine base of the tool magazine and comprising an engaging section with which the tool holder is to be engaged; and
a pair of claw members pivotable around a fulcrum, the pair of claw members sandwiching and gripping the tool holder in a state where the tool holder is engaged with the engaging section,
wherein the engaging section of the base stand has a groove section extending in a direction perpendicular to an opposing direction in which the pair of claw members face each other and an axial direction of the fulcrum.

2. The tool-gripping member according to claim 1,
wherein the groove section has a predetermined groove width in the opposing direction, and
when viewed from one side in the axial direction, the groove section overlaps with a center of the engaging section in the opposing direction.

3. The tool-gripping member according to claim 1,
wherein the tool holder has a groove section at a predetermined position, and
the engaging section has a fitting part configured to fit into the groove section.

4. The tool-gripping member according to claim 1,
wherein a material of the base stand is aluminum.

5. The tool-gripping member according to claim 1,
wherein a material of the base stand is aluminum die-cast.

6. The tool-gripping member according to claim 1,
wherein the tool-gripping member is for being provided on a machine tool having an axial direction of a spindle extending in a horizontal direction.

7. A tool magazine, comprising:
the tool-gripping member according to any one of claims 1 to 6.

8. A machine tool, comprising:
the tool magazine according to claim 7.
